Europäisches Patentamt

European Patent Office

Office européen des brevets

(11) Publication number: **0 478 036 B1**

## EUROPEAN PATENT SPECIFICATION

(45) Date of publication of patent specification: **02.11.95**     (51) Int. Cl.⁶: **A23L  1/23**, A23L 1/226

(21) Application number: **91202209.2**

(22) Date of filing: **30.08.91**

(54) **Naturally flavoured food product.**

(30) Priority: **04.09.90 EP 90202337**

(43) Date of publication of application:
**01.04.92 Bulletin  92/14**

(45) Publication of the grant of the patent:
**02.11.95 Bulletin  95/44**

(84) Designated Contracting States:
**AT BE CH DE DK ES FR GB GR IT LI NL SE**

(56) References cited:
**EP-A- 0 173 401          EP-A- 0 233 378**
**EP-A- 0 247 646          EP-A- 0 298 552**
**EP-A- 0 321 056          GB-A- 1 423 004**

**H.-D. Belitz and W. Grosch, Lehrbuch der
Lebensmittelchemie, 2nd ed., Springer Ver-
lag, Berlin, Heidelberg, New York, Tokio, p.
408**

(73) Proprietor: **UNILEVER N.V.**
**Weena 455**
**NL-3013 AL Rotterdam (NL)**
(84) Designated Contracting States:
**BE CH DE DK ES FR GR IT LI NL SE AT**

(73) Proprietor: **UNILEVER PLC**
**Unilever House**

**Blackfriars**
**P.O. Box 68**
**London EC4P 4BO (GB)**
(84) Designated Contracting States:
**GB**

(72) Inventor: **Haring, Petrus Gerardus M. Unilever
Research
Vlaardingen Lab.,
Olivier van Noortlaan 120
NL-3133 AT Vlaardingen (NL)**
Inventor: **van Pelt, Johannes George, Unilever
Research
Vlaardingen Lab.,
Olivier van Noortlaan 120
NL-3133 AT Vlaardingen (NL)**
Inventor: **Andreae, Cornelis Frederik, Unilever
Research
Vlaardingen Lab.,
Olivier van Noortlaan 120
NL-3133 AT Vlaardingen (NL)**

(74) Representative: **Sikken, Antonius H. J. M. et al
UNILEVER N.V.,
Patent Division,
P.O. Box 137
NL-3130 AC Vlaardingen (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3. 10/3.0 9/3.3.3)

**Description**

The invention relates to a food product comprising flavouring material, in particular to such a product containing or imparting a butter flavour. The term food product as used here encompasses both flavoured foodstuffs as well as flavour concentrates for flavouring foodstuffs. Examples of food products covered by the present invention are: spreads, (non-dairy) creams, ice cream, bakery margarine and other bakery products, syrup, cheese, mayonnaise etc.

Flavour concentrates used in food products normally contain a number of flavour compounds. The compounds in such concentrates may all possess a very similar chemical structure such as, for instance, a concentrate of aldehydes of different carbon chain length. In many cases, however, commercial flavour concentrates contain a number of different flavour blocks, each block containing one or more flavour compounds having a more or less common structure and/or origin.

In order to arrive at a flavour concentrate having the desired flavouring properties one has to obtain flavour blocks giving the right flavour contribution to said concentrate, and to combine the respective flavour blocks in such a manner that a pleasant balanced flavour will be obtained if said concentrate is added to a particular food product at a particular concentration.

Flavour compounds and flavour blocks can be divided into three groups. Those compounds and blocks which are natural, those which are nature identical and the remaining synthetic flavour compounds and blocks which are not nature identical. It is the object of the present invention to make available a flavour concentrate containing natural flavour compounds and/or blocks, which concentrate imparts a very pleasant and balanced flavour to food products, in particular food products containing a substantial amount of fat.

The isolated use of natural flavour blocks is described in EP (A) 0 247 646, EP (A) 0 298 552 and EP (A) 0 321 056.

We have found that the combined use of effective amounts of heat-treated butterfat and a diacetyl concentrate obtained through fermentation in food products can impart thereto a very pleasant and desirable flavour. Accordingly, the present invention is concerned with a process for flavouring a food product comprising adding flavouring material, wherein all of the flavouring material has been obtained via a natural route and at least 50 ppm heat treated butterfat and at least 0.5 ppm, preferably at least 1.0 ppm of a diacetyl concentrate obtained through fermentation, preferably through fermentation using lactic acid bacteria, such as S. diacetilactis are added to the food product.

As compared to similar food products containing nature identical flavour compounds and blocks, the food products obtained by the present process display a more balanced and subtle flavour. Although we do not wish to be bound by theory, we believe that the latter phenomenon can be explained from the presence of minor components in the natural flavour blocks used in accordance with the invention.

The term natural, whenever used in connection with flavours or their preparation, has the same meaning as defined by IOFI (International Organization of Flavour Industry). Thus the present invention does not encompass food products containing synthetic flavour compounds, e.g. nature-identical flavour compounds.

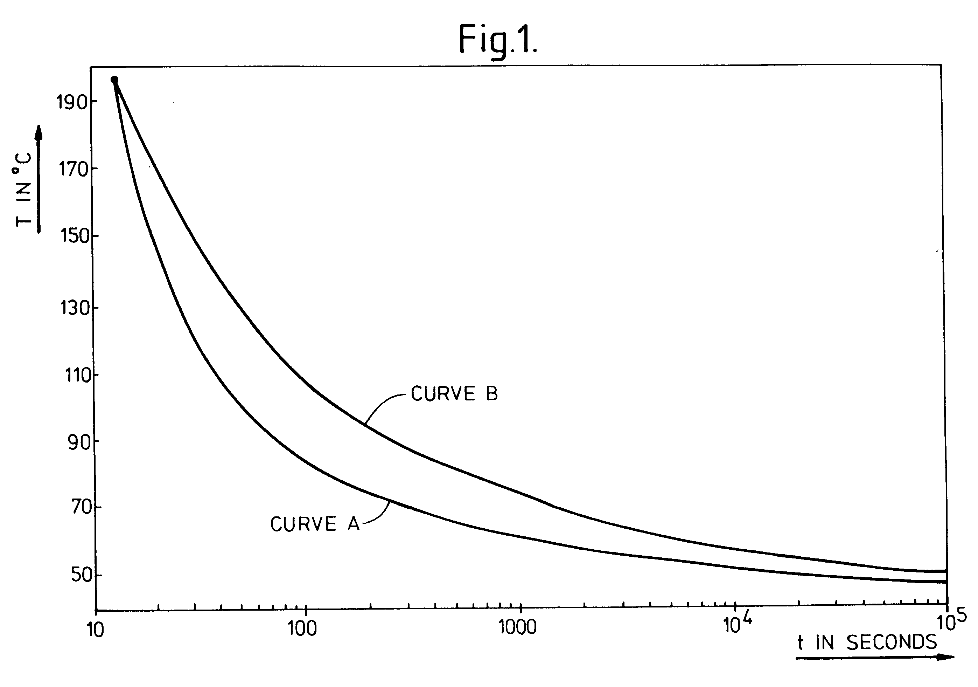

The term heat-treated butterfat as used here encompasses butterfat that has been subjected to a heat-treatment at a sufficiently high temperature for an adequate period of time. Generally, the higher the temperature employed, the shorter the period of heating can be. Generally the heat-treated butterfat has been heated to a temperature of at least 50°C for at least 10 minutes. Preferably, the conditions applied during the heat-treatment at atmospheric pressure should be chosen such that the combination of temperature and period of heating lies above curve A of Figure 1. More preferably said conditions are chosen such that the combination of temperature and heating period lies above curve B of Figure 1. Naturally the optimum conditions may be different if the butterfat is subjected to a heat-treatment at non-atmospheric pressure. The heating up and cooling down regime employed should be taken into account when determining whether the heating conditions applied are in accordance with the present invention.

The heat-treated butterfat incorporated in the present food product can suitably have been subjected to such heat-treatment in the presence of additional components. According to a very preferred embodiment said heat-treated butterfat has been heat-treated in the presence of an ingredient selected from the group consisting of water, protein, protein hydrolysates, alkali metal salt, earth alkali metal salt, reducing sugars, anti-oxidant and mixtures thereof. The butterfat may advantageously been heated under such conditions that hydrolysis of the fat is obtained, Maillard reactions are observed, and/or mild oxidation is achieved. Protein hydrolysates can suitably be obtained from e.g. yeast extracts.

The diacetyl concentrate present in the food product can, for instance, be a fermented aqueous system, a powder obtained by drying such fermented aqueous system, or essentially pure diacetyl distilled from such aqueous system. We have found that starter distillates, although having been prepared via fermentation, do not give as good a flavour contribution. Thus, in a preferred embodiment of the invention, the diacetyl concentrate is not a starter distillate or derived therefrom.

According to a very preferred embodiment of the invention the diacetyl concentrate used in the present product has been produced through fermentation of a dairy aqueous systems, e.g. whole milk, skim milk, butter milk, cream or whey. After fermentation, such an aqueous system can be included in the present food product as such, or it can be dried to a powder first. Such a dried powder can suitably be obtained by, for instance, spray drying or freeze drying.

According to preferred embodiment the present product contains at least 300 ppm of diacetyl and/or alpha-acetolactate calculated on diacetyl concentrate. Alpha-acetolactate is a precursor of diacetyl and can be converted into the latter compound relatively easily. Preferably the diacetyl concentrate included in the present food product is powder containing a substantial amount of milk protein.

Best flavour results are obtained if the present food product contains natural flavour blocks at such concentration levels that said product contains at least 0.5 ppm diacetyl and at least 1 ppm butanoic acid. More preferably the product contains at least 1 ppm diacetyl and at least 2 ppm butanoic acid. In addition to these compounds, according to a very preferred embodiment, the present product contains at least 10 ppm acetic acid and at least 0.5 ppm propionic acid.

In order to obtain a flavour closely resembling the flavour of butter, we have found it advantageous to also include a flavour block of lactones, preferably delta-lactones. Natural lactones to be used in the present product, can suitably be obtained through fermentation of e.g. fatty acids or hydroxy fatty acids by means of suitable micro-organisms. The latter fermentation can generate both gamma- and delta-lactones, the latter being preferred. Natural delta-lactones can suitably be obtained from lauric fats such as coconut and palm kernel oil, which contain considerable quantities of such lactones. According to a preferred embodiment the food product contains such an amount of a delta-lactone concentrate obtained from lauric fat that the food product contains at least 0.5 ppm $C_6$-$C_{12}$ delta-lactones, more preferably at least 0.5 ppm $C_{10}$-$C_{12}$ delta-lactones.

Another flavour ingredient which can advantageously be incorporated in the present food product is dimethylsulfide or precursors thereof (e.g. S-methyl methionine). Examples of suitable sources of natural dimethylsulfide are essential oils and algae. In a preferred embodiment of the invention the food product contains such an amount of a dimethylsulfide concentrate obtained through extraction from plant material that the food product contains at least 0.02 ppm, preferably at least 0.1 ppm dimethylsulfide. An example of an essential oil from which dimethylsulfide can suitably be extracted is spearmint oil.

Yet another flavour block that can beneficially be included in the present food product is a methylketone concentrate obtained by fermentation with a micro-organism, preferably P. roqueforti. The latter micro-organisms, in order to obtain substantial amounts of methylketones, should have been grown on a medium containing fatty acids. According to a preferred embodiment, the present food product contains such an amount of a methylketone concentrate obtained by fermentation that the food product contains at least 0.2 ppm, at least 1.0 ppm $C_5$-$C_{11}$ methylketones.

Also the additional inclusion of skatole and/or indole derived from naturally produced tryptophan produces a further improved flavour. Accordingly, in a preferred embodiment the present product contains such an amount of an indole/skatole concentrate derived from tryptophan degredation that the food product contains at least 0.01 ppm of indole, skatole or a mixture thereof. According to a very preferred embodiment the latter concentrate is included in such an amount that the skatole concentration exceeds 0.01 ppm and/or the indole concentration exceeds 0.05 ppm. Indole and skatole can both be obtained from tryptophan through hydrolysis, e.g. high temperature hydrolysis. Tryptophan can suitably be obtained through a natural process by fermentation of sugar with an L-tryptophan producing microbe.

According to a very preferred embodiment of the invention, the product contains at least 10 wt.% fat and fat and water constitute at least 75 wt.% of the total product. Examples of such products are: spreads, creams, bakery margarine etc. Most preferably the present product is a spread, preferably containing from 17 to 83 wt.% fat phase and 83 to 17 wt.% aqueous phase.

The milk protein present in the food product is preferably selected from the group consisting of skim milk protein, whey protein, buttermilk protein, whole milk protein, cream protein or mixtures thereof. It was found advantageous to include milk protein in the form of a powder or an aqueous system which previously has been subjected to fermentation. Preferably the latter fermentation is effected in the presence of lactic acid bacteria. Examples of lactic acid bacteria which can suitably be used in such fermentations are: S. diacetilactis, L. cremoris, S. lactis, L. citrovorum. Preferably the milk protein is included in the form of a powder.

Another aspect of the present invention is a food product obtainable by the process described above which food product contains exclusively natural flavours, comprising at least 50 ppm of heat treated butterfat and at least 300 ppm of a diacetyl concentrate obtained through fermentation, preferably through fermentation using lactic acid bacteria. In addition to the heat treated butterfat and diacetyl concentrate, the aforementioned flavour concentrates can advantageously be employed in the present process at the concentration levels specified above.

Yet another aspect of the present invention is the use of a natural flavour concentrate for flavouring a food product, said use comprising the step or steps of adding to the food product at least 50 ppm heat-treated butterfat and at least 0.5 ppm of a diacetyl concentrate obtained through fermentation, preferably through fermentation using lactic acid bacteria. According to preferred embodiments of the use of the natural flavour concentrate, said use includes the addition of further flavour blocks as described hereinabove.

The invention is further illustrated by means of the following examples:

Example 1

A margarine containing about 80 % by weight of a fat phase and 20 % an aqueous phase was prepared from a conventional fat blend and using processing apparatus and conditions well known in the art. The margarine product was flavoured by including therein the following natural flavour blocks and compounds (in ppm calculated on total product.

| Flavour block/compound | | Concentration |
|---|---|---|
| Diacetyl concentrate | (1) | 12,000 |
| Hydrolized butterfat | (2) | 250 |
| Acetic acid | (3) | 120 |
| Methylketones | (4) | 100 |
| Dimethylsulfide | (5) | 1 |
| Heated butterfat | (6) | 1000 |
| Aldehydes | (7) | 200 |
| Delta lactones | (8) | 25 |
| Gamma decalacton | | 4 |
| Indole/skatole | (9) | 0.14 |

(1)  Obtained by means of the process described in Example IV of EP-B 0 247 646

(2)  Obtained by heating butterfat in an autoclave, under high pressure and in the presence of water, to a temperature of 180°C for a sufficiently long period of time to obtain 50% hydrolysis

(3)  12% acetic acid solution ex. Haas & Kuehne, Hamburg, Germany

(4)  Oil containing 6% $C_5$-$C_{11}$ methylketones obtained by separating off oil from water-in-oil emulsion fermented with P. roqueforti, said emulsion containing hydrolyzed coconut oil

(5)  10% solution of dimethylsulfide obtained through extraction from spearmint oil

(6)  Butterfat heated in the presence of skim milk powder at 130°C for 10 minutes. System containing 20% skim milk powder and 10% water by weight of butterfat

(7)  Prepared as in Example 3 of EP-A 0 298 552

(8)  $C_{12}$ lactone concentrate obtained by the process described in EP-A 0 321 056

(9)  Obtained through heat hydrolysis of a 2% tryptophan solution producing indole and skatole in a weight ratio of 6:1. L-tryptophan obtained from Kyowa Hakko Kogyo Co., Ltd. Tokyo, Japan (produced by L-tryptophan producing microbe)

The margarine product so obtained is found to have a very pleasant and balanced butter-like flavour and taste.

**Claims**

1. Process for flavouring a food product characterised in that exclusively flavouring material obtained via a natural route is added to the food product, comprising adding at least 50 ppm of heat-treated butterfat and at least 0.5 ppm of a diacetyl concentrate obtained through fermentation, preferably through fermentation using lactic acid bacteria, to the food product.

2. Process according to claim 1, wherein the heat-treated butterfat has been heat-treated in the presence of an ingredient selected from the group consisting of water, protein, alkali metal salt, earth alkali metal salt, reducing sugars, anti-oxidant and/or mixtures thereof.

3. Process according to claim 1 or 2, wherein the diacetyl concentrate has been produced through fermentation of a dairy aqueous system.

**EP 0 478 036 B1**

4. Process according to any one of claims 1-3, wherein at least 300 ppm of diacetyl and/or alpha-acetolactate, calculated on diacetyl concentrate, is added to the food product.

5. Process according to any one of claims 1-4, wherein such an amount of a delta-lactone concentrate obtained from lauric fat is added to the food product that the food product contains at least 0.5 ppm $C_6$-$C_{12}$ delta-lactones.

6. Process according to any one of claims 1-5, wherein such an amount of a dimethylsulfide concentrate obtained from plant material is added to the food product that the food product contains at least 0.02 ppm dimethylsulfide.

7. Process according to any one of claims 1-6, wherein such an amount of a methylketone concentrate obtained by fermentation with P. roqueforti is added to the food product that the food product contains at least 1 ppm of $C_5$-$C_{11}$ methylketones.

8. Process according to any one of claims 1-7, wherein such an amount of an indole/skatole concentrate derived from tryptophan degredation is added to the food product that the food product contains at least 0.01 ppm of indole, skatole or a mixture thereof.

9. Process according to any one of claims 1-8, wherein the product contains at least 10 wt.% fat and wherein fat and water constitute at least 75 wt.% of the total product.

10. Use of a natural flavour concentrate for flavouring a food product, said use comprising the step or steps of adding to the food product:
     (a) at least 50 ppm heat-treated butterfat,
     (b) at least 0.5 ppm of a diacetyl concentrate obtained through fermentation, preferably through fermentation using lactic acid bacteria.

11. Food product obtainable by the process according to any one of claims 4-8.

**Patentansprüche**

1. Verfahren zum Aromatisieren eines Nahrungsproduktes, dadurch gekennzeichnet, daß dem Nahrungsprodukt ein ausschließlich auf natürlichem Weg erhaltenes Aromatisierungsmaterial zugefügt wird, umfassend das Zugeben von mindestens 50 ppm wärmebehandeltem Butterfett und mindestens 0,5 ppm eines durch Fermentation, vorzugsweise durch Fermentation unter Verwendung von Milchsäurebakterien, erhaltenen Diacetylkonzentrates zum Nahrungsprodukt.

2. Verfahren nach Anspruch 1, bei dem das wärmebehandelte Butterfett in Gegenwart eines Bestandteiles, der aus der aus Wasser, Protein, Alkalimetallsalz, Erdalkalimetallsalz, reduzierenden Zuckern, Antioxidationsmittel und/oder Mischungen davon bestehenden Gruppe ausgewählt ist, wärmebehandelt worden ist.

3. Verfahren nach Anspruch 1 oder 2, bei dem das Diacetylkonzentrat durch Fermentation eines wäßrigen Molkereisystems produziert worden ist.

4. Verfahren nach einem der Ansprüche 1 bis 3, bei dem dem Nahrungsprodukt mindestens 300 ppm Diacetyl und/oder alpha-Acetolacetat, berechnet auf das Diacetylkonzentrat, zugefügt werden.

5. Verfahren nach einem der Ansprüche 1 bis 4, bei dem dem Nahrungsprodukt eine derartige Menge eines aus Lauric-Fett erhaltenen delta-Lactonkonzentrates zugefügt wird, daß das Nahrungsprodukt mindestens 0,5 ppm $C_6$-$C_{12}$-delta-Lactone enthält.

6. Verfahren nach einem der Ansprüche 1 bis 5, bei dem dem Nahrungsprodukt eine derartige Menge eines Dimethylsulfidkonzentrates zugefügt wird, daß das Nahrungsprodukt mindestens 0,02 ppm Dimethylsulfid enthält.

7. Verfahren nach einem der Ansprüche 1 bis 6, bei dem dem Nahrungsprodukt eine derartige Menge eines durch Fermentation mit P. roqueforti erhaltenen Methylketonkonzentrates zugefügt wird, daß das Nahrungsprodukt mindestens 1 ppm $C_5$-$C_{11}$-Methylketone enthält.

8. Verfahren nach einem der Ansprüche 1 bis 7, bei dem dem Nahrungsprodukt eine derartige Menge eines aus dem Tryptophanabbau abgeleiteten Indol/Skatol-Konzentrates zugefügt wird, daß das Nahrungsprodukt mindestens 0,01 ppm Indol, Skatol oder eine Mischung davon enthält.

9. Verfahren nach einem der Ansprüche 1 bis 8, bei dem das Produkt mindestens 10 Gew.-% Fett enthält und bei dem Fett und Wasser mindestens 75 Gew.-% des Gesamtproduktes ausmachen.

10. Verwendung eines natürlichen Aromakonzentrates zum Aromatisieren eines Nahrungsprodukts, wobei die Verwendung den oder die Schritte der Zugabe von
    (a) mindestens 50 ppm wärmebehandelten Butterfett,
    (b) mindestens 0,5 ppm eines durch Fermentation, vorzugsweise durch Fermentation unter Verwendung von Milchsäurebakterien, erhaltenen Diacetylkonzentrates
zu dem Nahrungsprodukt umfaßt.

11. Nahrungsprodukt, erhältlich nach dem Verfahren gemäß einem der Ansprüche 4 bis 8.

**Revendications**

1. Procédé d'aromatisation d'un produit alimentaire, caractérisé en ce qu'on ajoute à ce produit alimentaire uniquement une matière d'aromatisation obtenue par voie naturelle, comprenant l'ajout d'au moins 50 ppm de graisse de beurre thermiquement traitée et au moins 0,5 ppm d'un concentré de diacétyle obtenu par fermentation, de préférence par fermentation utilisant des bactéries d'acide lactique.

2. Procédé selon la revendication 1, dans lequel la graisse de beurre thermiquement traitée a été traitée par la chaleur en présence d'un ingrédient choisi parmi l'eau, une protéine un sel de métal alcalin, un sel de métal alcalino-terreux, des sucres réducteurs, un anti-oxydant et/ou un mélange de ceux-ci.

3. Procédé selon la revendication 1 ou 2, dans lequel le concentré de diacétyle a été produit par fermentation d'un système aqueux laitier.

4. Procédé selon l'une quelconque des revendications 1 à 3, dans lequel on ajoute au produit alimentaire au moins 300 ppm de diacétyle et/ou d'alpha-acétolactate calculées par rapport au concentré de diacétyle.

5. Procédé selon l'une quelconque des revendications 1 à 4, dans lequel on ajoute au produit alimentaire une quantité de concentré de delta-lactone obtenu à partir de graisse laurique telle que le produit alimentaire renferme au moins 0,5 ppm de delta-lactones en $C_{6-12}$.

6. Procédé selon l'une quelconque des revendications 1 à 5, dans lequel on ajoute au produit alimentaire une quantité de concentré d'un sulfure de diméthyle provenant de matières végétales telle que le produit alimentaire renferme au moins 0,02 ppm de sulfure de diméthyle.

7. Procédé selon l'une quelconque des revendications 1 à 6, selon lequel on ajoute au produit alimentaire une quantité de concentré de méthylcétone obtenu par fermentation avec P. roqueforti telle que le produit alimentaire renferme au moins 1 ppm de méthylcétones en $C_{5-11}$.

8. Procédé selon l'une quelconque des revendications 1 à 7, selon lequel on ajoute au produit alimentaire une quantité de concentré d'indole/scatole provenant de la dé gradation du tryptophane telle que le produit alimentaire renferme au moins 0,01 ppm d'indole, de scatole ou d'un mélange de ceux-ci.

9. Procédé selon l'une quelconque des revendications 1 à 8, dans lequel le produit contient au moins 10% en poids de graisse et dans lequel la graisse et l'eau constituent au moins 75% en poids du produit total.

**10.** Utilisation d'un concentré aromatisé naturel pour aromatiser un produit alimentaire, ladite utilisation comprenant le ou les stades d'addition au produit alimentaire :
(a) d'au moins 50 ppm de graisse de beurre traitée par la chaleur,
(b) d'au moins 0,5 ppm d'un concentré de diacétyle obtenu par fermentation, de préférence par fermentation utilisant des bactéries d'acide lactique.

**11.** Produit alimentaire obtenable par le procédé selon l'une quelconque des revendications 4 à 8.

Fig.1.